# EUROPEAN PATENT APPLICATION

(11) **EP 4 664 648 A1**
(43) Date of publication of application: **17.12.2025**
(21) Application number: 24927586.8
(22) Date of filing: 12.12.2024
(51) Int. Cl.: H01M 50/383, H01M 10/04, H01M 50/249

(54) **BATTERY SYSTEM AND VEHICLE INCLUDING SAME**

(30) Priority: 22.03.2024 KR 20240039933
(71) Applicant: LG Energy Solution, Ltd., Seoul 07335 (KR)
(72) Inventor: JUNG, Ki Taek, Daejeon 34122 (KR); PARK, Won Kyoung, Daejeon 34122 (KR); KIM, Young Gil, Daejeon 34122 (KR)
(74) Representative: BCKIP Part mbB
(86) International application number: PCT/KR2024/020283
(87) International publication number: WO 2025/198130

(57) **Abstract**

Disclosed are a battery system and a vehicle including the same, the battery system including a battery module having one surface on which venting parts are formed, a pack casing in which the battery module is installed, and an elastic part provided on one surface of the battery module and disposed at a point that does not overlap the venting part, in which a part of the elastic part protrudes toward the pack casing and is supported, such that the elastic part presses one surface of the battery module based on the pack casing.

## Description

### [Technical Field]

The present disclosure relates to a battery system with improved safety in an abnormal battery situation, and a vehicle including the same.

### [Background Art]

Recently, a technology for reducing carbon has been actively developed to solve environmental issues such as abnormal atmospheric temperatures. In order to reduce carbon, energy needs to be produced by environmentally friendly methods instead of fossil fuel, the produced energy needs to be stored in the form of electrical energy, and the stored electrical energy needs to be used for vehicles, various types of industrial sites, and homes.

In order to utilize electrical energy while reducing carbon, it is essential to use batteries capable of storing and retrieving electrical energy. Therefore, it is essential to ensure the performance of the battery to sufficiently store electrical energy and use the electrical energy without discomfort.

The battery mainly uses a redox reaction of metal ions. The battery uses metal ions with a high density to improve a capacity of the battery, charging and discharging performance, and efficiency of the battery. Many studies are also being conducted on materials, which constitute electrolytes, and on solid electrolytes and the like. However, there is a general problem in that stability of the battery deteriorates as the performance of the battery is developed.

Batteries used in vehicles, industries, or homes are manufactured in physical units called packs. The battery pack is configured such that a plurality of battery cells is embedded in a battery casing and sealed. The battery pack serves to prevent fire from spreading to the outside even in the event of an accident such as thermal runaway in the battery and protect the battery cells therein so that the battery cells are not degraded by being affected by an external environment, or the battery cells are not physically damaged.

In the battery pack, the plurality of battery cells is embedded in an intermediate form of a module or an assembly (cell module assembly (CMA)). The battery module or the assembly is configured by assembling the plurality of battery cells into one module or assembly. A plurality of modules is fastened into a pack casing, such that the battery pack is completely manufactured. When the battery is maintained, the maintenance may be performed on the unit of the module or the assembly, which facilitates the maintenance.

A plurality of unit battery cells, which constitutes the module or the assembly, includes a positive electrode, a negative electrode, and an electrolyte. Because the battery cell generates heat when the battery cell is charged and discharged, it is necessary to effectively dissipate heat from the battery cell. In addition, the battery module, the assembly, or the battery pack needs to be designed to efficiently dissipate heat to prevent a safety accident.

Meanwhile, the battery may be degraded when the battery is subjected to manufacturing errors, when the battery is excessively charged or discharged, or when the battery ages. Further, when the battery continues to deteriorate, a fire may eventually occur. Therefore, it is necessary to prepare in advance to prevent a fire from occurring in the battery. To this end, it is important to consistently sense a state of the battery and recognize and cope with, in advance, a problem when the problem occurs. In the event of an unexpected problem, it is necessary to minimize damage.

In particular, when flame occurs in a particular cell of a particular module among the plurality of battery modules in the battery pack, the propagation of the flame to another adjacent battery cell needs to be prevented, and the propagation of the flame to another adjacent module also needs to be prevented. Therefore, in view of the battery module, the gas in the battery cell with a problem needs to be smoothly vented, and it is possible to maximally prevent or delay the influence of the vented gas and the flame to another cell or another module.

The foregoing explained as the background is intended merely to aid in the understanding of the background of the present disclosure, and is not intended to mean that the present disclosure falls within the purview of the related art that is already known to those skilled in the art.

### [Disclosure]

### [Technical Problem]

The present disclosure has been made in an effort to solve the above-mentioned problem, and an object of the present disclosure is to provide a battery system, in which in the event of a fire in a particular battery cell or battery module, flame is prevented from propagating to an adjacent cell or module, and a gas is smoothly vented, such that battery safety may be improved, and a vehicle including the same.

Technical problems to be solved by the present disclosure are not limited to the above-mentioned technical problems, and other technical problems, which are not mentioned above, may be clearly understood from the following descriptions by those skilled in the art to which the present disclosure pertains.

### [Technical Solution]

In order to achieve the above-mentioned object, the present disclosure provides a battery system including: a battery module having one surface on which venting parts are formed; a pack casing in which the battery module is installed; and an elastic part provided on one surface of the battery module and disposed at a point that does not overlap the venting part, in which a part of the elastic part protrudes toward the pack casing and is supported, such that the elastic part presses one surface of the battery module based on the pack casing.

In the case of the battery system according to the present disclosure, the plurality of venting parts may be provided on one surface of the battery module and spaced apart from one another, and the elastic part may have a lattice shape and be positioned between the plurality of venting parts.

In the case of the battery system according to the present disclosure, an outermost peripheral venting part, among the plurality of venting parts formed on one surface of the battery module, may be provided adjacent to a rim of the battery module, and the elastic part may be provided at a point disposed inward of the outermost peripheral venting part.

In the case of the battery system according to the present disclosure, the elastic part may include: a base portion; and a support portion, and the support portion may be supported on the pack casing and made by bending a part of the base portion in a direction toward the pack casing.

In the case of the battery system according to the present disclosure, the elastic part may have an insulation portion, and the insulation portion may be made of a fire resistance material and disposed between the base portion and the battery module.

In the case of the battery system according to the present disclosure, the insulation portion of the elastic part may be tightly attached to one surface of the battery module, and an end of the support portion may be supported on an inner surface of the pack casing.

In the case of the battery system according to the present disclosure, the base portion of the elastic part may be made of a metallic material, and the support portion may be integrated with the base portion.

In the case of the battery system according to the present disclosure, a bead may be provided on the base portion of the elastic part and protrude in a direction in which the base portion extends.

In the case of the battery system according to the present disclosure, the bead may be formed on the base portion and extend to the support portion.

In the case of the battery system according to the present disclosure, the bead may protrude in a direction toward the pack casing.

In the case of the battery system according to the present disclosure, the support portion of the elastic part may be pressed by the pack casing when the pack casing does not expand, such that a preload may be formed toward the battery module.

In the case of the battery system according to the present disclosure, when the pack casing expands, the support portion of the elastic part may be kept supported on the pack casing, and an angle at which the support portion is bent toward the pack casing may be increased.

In the case of the battery system according to the present disclosure, the support portion of the elastic part may be supported on one surface of the battery module by an elastic body.

In the case of the battery system according to the present disclosure, the elastic body may be extended when the pack casing expands, and the support portion may be elastically supported on the pack casing by the elastic body.

In the case of the battery system according to the present disclosure, the support portion of the elastic part may be provided as a plurality of support portions, and lengths or bending angles of the plurality of support portions may be increased as the distance from a central portion of the pack casing decreases.

In the case of the battery system according to the present disclosure, the base portion of the elastic part may include: a plurality of first frames spaced apart from one another and configured to traverse the battery module in a width direction; and a plurality of second frames configured to connect the first frames and extending in a direction intersecting the first frames, and the support portion may be configured by bending a part of the second frame toward the pack casing.

In the case of the battery system according to the present disclosure, the support portion may be configured by bending any one of one end and the other end of the second frame, and the support portions may be formed in a staggered manner at one end and the other end of the pair of adjacent second frames.

In the case of the battery system according to the present disclosure, all outermost peripheral ends of the second frames disposed at outermost peripheries among the plurality of second frames may be bent to configure the support portions.

In the case of the battery system according to the present disclosure, the pack casing may be opened at one side thereof, one opened side may be closed by a pack lead, and the elastic part may be provided between the pack lead and the battery module.

In the case of the battery system according to the present disclosure, a module cover having the plurality of venting parts may be provided on one surface of the battery module, and the elastic part may be disposed between the pack casing and the module cover and provided at a point departing from the venting part.

A vehicle according to the present disclosure includes the above-mentioned battery system.

### [Advantageous Effects]

According to the battery system and the vehicle including the same of the present disclosure, the propagation of flame to another adjacent cell or module is prevented in the event of a fire in a particular battery cell or battery module, and the gas is smoothly vented from a battery cell or battery module having a problem, thereby improving overall safety of the battery system and a high-level system using the same.

The effects obtained by the present disclosure are not limited to the aforementioned effects, and other effects, which are not mentioned above, will be clearly understood by those skilled in the art from the following description.

### [Description of Drawings]

FIG. 1 is a view illustrating a battery system according to an embodiment of the present disclosure.
FIG. 2 is a view illustrating an elastic part of the battery system illustrated in FIG. 1.
FIG. 3 is a view illustrating a cross-section taken along line A-A' of the battery system illustrated in FIG. 2.
FIG. 4 is a view illustrating a cross-section of the battery system of the present disclosure in accordance with whether a pack casing expands.
FIG. 5 is a view illustrating a case in which the elastic part of the battery system of the present disclosure is provided at a lateral side of a battery module.
FIG. 6 is a view illustrating a cross-section of a battery system according to still another embodiment of the present disclosure in accordance with whether a pack casing expands.
FIG. 7 is a view for explaining a difference between the elastic parts at respective points in the battery system according to the embodiment of the present disclosure.
FIG. 8 is a view illustrating a battery pack and a vehicle to which the battery system of the present disclosure is applied.

### [Mode for Invention]

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element. Singular expressions include plural expressions unless clearly described as different meanings in the context.

In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof. The suffixes "module", "unit", "part", and "portion" used to describe constituent elements in the following description are used together or interchangeably in order to facilitate the description, but the suffixes themselves do not have distinguishable meanings or functions.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

Hereinafter, embodiments disclosed in the present specification will be described in detail with reference to the accompanying drawings. The same or similar constituent elements are assigned with the same reference numerals regardless of the reference numerals, and the repetitive description thereof will be omitted. In a battery, a plurality of battery cells are assembled to constitute a battery module 300, and the plurality of battery modules 300 are assembled to constitute a battery pack BP. Batteries are subjected to stress due to design or manufacturing defects, excessive charging or discharging, misuse, and the like. When this stress is continuously applied, the battery cells deteriorate. When a battery cell deteriorates and remains over a certain temperature, the flammable electrolyte inside the battery cell vaporizes and erupts, and the pressure inside the cell increases, causing a fire inside the battery cell. This in turn leads to fires in adjacent battery cells, and as the fires spread between the cells, the fires spread between the battery modules 300, causing a thermal runaway. It is important to smoothly discharge a gas in a desired direction while preventing or delaying the propagation of the gas or flame to the adjacent cell or the adjacent module 300 in the event of thermal runaway in the battery cell or the battery module 300.

The present disclosure is provided to prevent one surface of the battery module 300 from being separated by a high temperature or high pressure in the event of thermal runaway caused by a fire occurring in the battery cell or the battery module 300, thereby smoothly venting the gas from the inside of the cell or module 300 in which thermal runaway occurs, preventing the propagation of the gas or flame to the adjacent cell or the adjacent module 300, and improving the performance and safety of the battery pack BP.

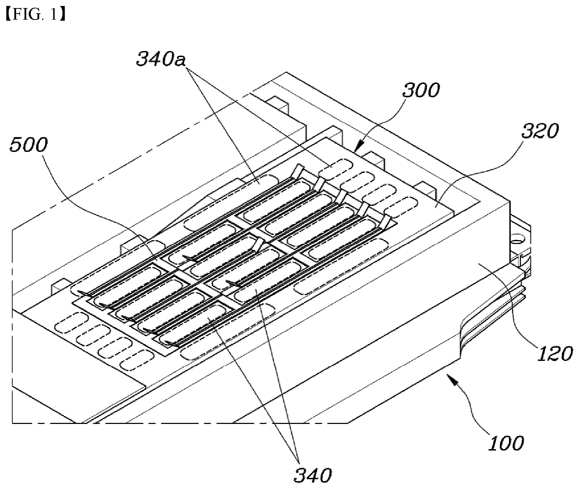

Specifically, as illustrated in FIG. 1, the battery module 300 of the present disclosure includes a module cover 320. The module cover 320 is coupled to surfaces of the battery cells to protect the corresponding battery module 300 and battery cell from the gas or flame in the adjacent battery cell or the battery module 300. Venting parts 340 are provided at one side of the module cover 320 and smoothly vent the gas or flame occurring in the event of thermal runaway in the battery cell in the corresponding battery module 300.

In addition, the module cover 320 may be made of a material, such as mica (mica material), having heat resistance and insulation to prevent the gas or flame, which is generated by thermal runaway in another adjacent battery cell or the battery module 300, from propagating to the corresponding cell or the module 300. FIG. 1 illustrates that the module cover 320 is positioned at upper ends of the battery cells to protect the cells. The module cover 320 is not necessarily limited only to the illustrated embodiment to protect the cells and the module 300. The module cover 320 may protect the battery cells in the battery module 300 by covering the battery module 300 at various points such as a lateral surface or a lower surface of the battery module 300.

Meanwhile, the venting parts 340 may be formed in the battery module 300 and discharge the gas or flame generated in the event of thermal runaway in the battery cell or the battery module 300. With reference to FIG. 1, the venting parts 340 are formed in the module cover 320 of the battery module 300, and venting holes are formed in case that the venting parts 340 are removed. The venting hole is formed in an outer surface of the battery the module 300 and serves to discharge the gas or flame caused by thermal runaway generated in the module 300. The plurality of venting holes may be provided to smoothly discharge the gas or flame. In addition, the venting holes need to smoothly vent the gas or flame in the event of thermal runaway in the corresponding cell or the module 300. However, because the module cover 320 needs to protect the cells provided therein in the event of thermal runaway in the adjacent cell or the adjacent module 300, the venting part 340 is provided in the module cover 320 and has a partially cut shape. That is, at ordinary times, the venting holes are blocked by the venting parts 340 to protect the cells present in the module 300. Only in a case in which the gas or flame needs to be discharged in a high-temperature or high-pressure situation, the partially cut venting part 340 is fully cut and opened as the venting hole. In addition, the venting part 340 may be applied to the module cover 320 in various ways, such as attachment or fitting, in addition to the partial cutting as long as the module cover 320 appropriately protects the cells or the module 300 at ordinary times and satisfies the condition in which the venting part 340 is opened only when necessary.

Meanwhile, good battery performance means that the battery has a high energy density. Because the battery pack BP is configured by assembling the plurality of battery modules 300 and the modules 300 are configured by coupling the plurality of battery cells, a method of densely stacking the battery cells is a method capable of improving energy density of the battery. Therefore, in order to improve the battery performance, a maximally large number of battery cells need to be stacked at a high density in the battery module 300.

The venting part 340 is provided to discharge the gas or flame generated in the event of thermal runaway in the battery cell. The venting part 340 is formed in the outer surface of the battery module 300 or the module cover 320 and positioned at a position corresponding to a position at which the battery cell is present in the module 300. In addition, in order to ensure excellent performance of the battery, a maximally large number of battery cells are stacked at a high density in the battery module 300, and as a result, the battery cells are disposed to an outermost peripheral portion in the battery module 300. Therefore, in the case of the module 300 or the module cover 320, as illustrated in FIG. 1, venting parts 340a are provided even at the outermost peripheral portion of the module 300 or the module cover 320 in order to smoothly vent the gas or flame generated in the event of thermal runaway in the battery cells disposed at the outermost peripheral portion.

The present disclosure includes an elastic part 500 provided on one surface of the battery module 300, disposed at a point that does not overlap the venting part 340, and configured to press the module 300 to prevent the module 300 from separating. Further, the elastic part 500 may be made of a metallic material having heat resistance and press the battery module 300 without changing physical properties even under a high-temperature environment caused by thermal runaway. The elastic part 500 may include an insulator 560 having fire resistance in addition to the component for pressing the battery module 300, thereby preventing an electrical short circuit between the battery module 300 and a pack casing 100.

Specifically, the present disclosure proposes a battery system that includes the elastic part 500 positioned between the pack casing 100 and the battery module 300, in which the elastic part 500 is disposed in a space that does not overlap the venting parts 340 on one surface of the battery module 300, and a part of the elastic part 500 protrudes toward the pack casing 100 and is supported.

The battery module 300 of the present disclosure includes the module cover 320, and the plurality of venting parts 340 are formed on the outer surface of the module 300 or the module cover 320 and spaced apart from one another. The venting part 340 includes the venting hole and thus discharges the gas or flame to the outside in the event of thermal runaway in the battery cell. As illustrated in FIG. 1, the elastic part 500 has a lattice shape and is positioned at a point departing from the venting parts 340 on the one surface of the module 300. The elastic part 500 with this lattice-shaped arrangement may smoothly discharge the gas or flame through the venting parts 340, prevent the battery module 300 or the module cover 320 from being separated by a high temperature or high pressure, and effectively prevent the gas or flame from propagating to the adjacent cell or the adjacent module 300.

In order to improve the battery performance, the battery cells are stacked at a high density in the battery module 300. The venting parts 340 positioned on one surface of the module 300 serve to smoothly discharge the gas or flame in the event of thermal runaway in the cells positioned in the module 300 and need to be formed at the position corresponding to the positions on one surface of the module 300 at which the cells are disposed. Therefore, the venting parts 340a are formed even at the outermost peripheral portion of the module 300 in order to discharge the gas or flame generated in the event of thermal runaway in the battery cells stacked at a high density.

Because the outermost peripheral venting parts 340a are formed to be adjacent to a rim of the battery module 300, the elastic part 500 is provided inside the module 300 or the module cover 320 based on the outermost peripheral venting parts 340a and disposed in a lattice shape between the plurality of venting parts 340 positioned inward. With the lattice-shape arrangement, the elastic part 500 is disposed at the point departing from the venting parts 340, such that the gas or flame generated in the event of thermal runaway may be smoothly vented, and the battery module 300 may also be effectively pressed. In addition, because the elastic part 500 is provided inside the outermost peripheral venting parts 340a, the battery cells present in the module 300 may be stacked densely, which may assist in improving overall battery performance.

The elastic part 500 includes a base portion 520 and support portions 540. The support portion 540 is made by bending a part of the base portion 520 toward the pack casing 100 and supported by the pack casing 100. The elastic part 500 is made of a metallic material capable of withstanding a high-temperature or high-pressure environment caused by thermal runaway occurring in the battery cell or the battery module 300. The support portion 540 made by bending a part of the base portion 520 may be integrated with the base portion 520. The elastic part 500 may be formed by manufacturing the base portion 520 made of a metallic material in a lattice shape by press-punching, forming the support portion 540 by cutting a part of the base portion 520, and then bending the cut portion. Because the base portion 520 and the support portion 540 of the elastic part 500 are integrated, the support portion 540 may effectively transmit a pressing force, which is received from the pack casing 100, to the base portion 520, such that the battery module 300 may be sufficiently pressed.

In addition, the elastic part 500 includes an insulation portion 560. The base portion 520 and the support portion 540 of the elastic part 500 are made of metallic conductors and thus have excellent electrical conductivity. If insulation is not used when the conductor is used, an electrical short circuit may occur in the pack casing 100. When the electrical short circuit occurs, a large electric current flows through the conductor, which may cause a secondary problem in which the battery and conductor are degraded or ignited. Therefore, the elastic part 500 needs to include the insulation portion 560 in addition to the base portion 520 and the support portion 540. The insulation portion 560 is positioned between the base portion 520 and the battery module 300 and serves to prevent an electrical short circuit between the module 300 and the pack casing 100. In addition, the insulation portion 560 may be made of mica (mica material), i.e., a fire resistance material because the insulation portion 560 needs to perform the insulation function even under a high-temperature environment caused by thermal runaway in the battery cell or the battery module 300. Of course, the battery system of the present disclosure is not limited only to the above-mentioned material or shape.

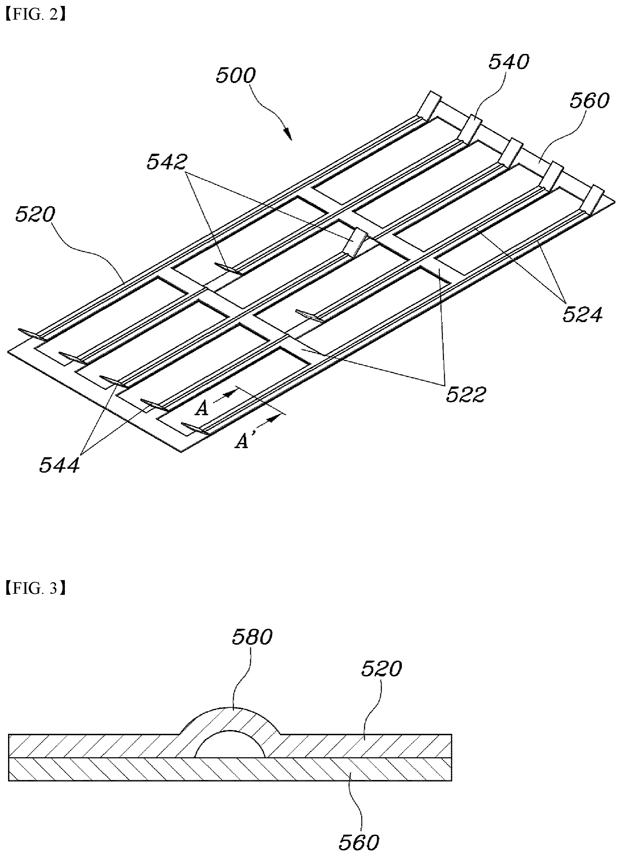

Meanwhile, as illustrated in FIG. 2, a bead 580 is provided on the base portion 520 of the elastic part 500 and protrudes in a direction in which the base portion 520 extends. The elastic part 500 includes the base portion 520 made of a metallic material. The base portion 520 made of a metallic material may be physically deformed such as distorted or bent under a high-temperature or high-pressure environment caused by thermal runaway in the battery cell or the battery module 300. In case that the base portion 520 is physically deformed by the gas or flame generated by thermal runaway, the battery module 300 cannot be sufficiently pressed. For this reason, the module 300 separates, and the gas or flame easily propagates to the adjacent cell or the adjacent module 300.

Therefore, as illustrated in FIGS. 2 and 3, the bead 580 may be formed so that a central portion of the base portion 520 protrudes in order to prevent the base portion 520 from being deformed. The bead 580 may be integrally formed to protrude from the base portion 520 during a process of forming the lattice shape of the elastic part 500 and made of the same material as the base portion 520. Because the bead 580 is formed on the base portion 520 of the elastic part 500, such that the base portion 520 is not easily deformed even under a high-temperature or high-pressure environment caused by thermal runaway, and the battery module 300 may be sufficiently pressed. In addition, as illustrated in FIG. 2, the bead 580 may be formed on one surface of a second frame 524 in the direction in which the base portion 520 extends and, of course, be present on one surface of a first frame 522 intersecting the second frame 524.

In addition, as illustrated in FIG. 3, the bead 580 may be formed to protrude from the base portion 520 toward the pack casing 100, formed to protrude toward the battery module 300 in the opposite direction, or formed to protrude toward both the base portion 520 and the battery module 300. Because the support portion 540 of the elastic part 500 may be integrated with the base portion 520, the bead 580 may extend not only to the base portion 520 but also to the support portion 540. In case that the bead 580 extends to the support portion 540, a cross-section of the support portion 540 has a shape in which the bead 580 protrudes, as illustrated in FIG. 3. The support portion 540 may be bent in this shape toward the pack casing 100 or toward the battery module 300.

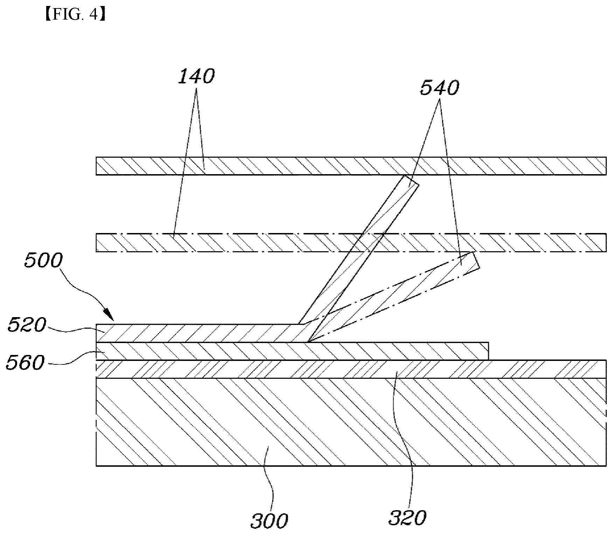

As illustrated in FIG. 4, the elastic part 500 is installed between the pack casing 100 and the battery module 300. The insulation portion 560 of the elastic part 500 is tightly attached to one surface of the battery module 300, and an end of the support portion 540 of the elastic part 500 is supported on and fixed to an inner surface of the pack casing 100.

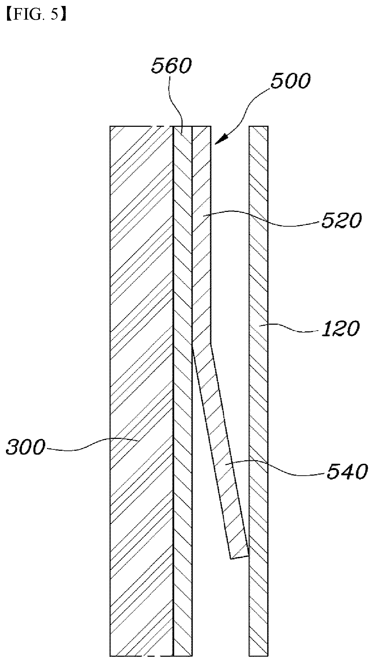

In the case of the battery system of the present disclosure, the pack casing 100 includes a casing body 120 and a pack lead 140, and the battery module 300 includes the module cover 320. Therefore, the elastic part 500 may be positioned between the pack lead 140 and the module cover 320, as illustrated in FIG. 4, or formed between the casing body 120 and the battery module 300, as illustrated in FIG. 5. In this case, the insulation portion 560 of the elastic part 500 may be tightly attached to one surface of the module cover 320 or the module 300, and the end of the support portion 540 of the elastic part 500 may be supported on and fixed to the inner surface of the pack lead 140 or the casing body 120.

Specifically, before the pack casing 100 expands, the support portion 540 of the elastic part 500 is kept in a state in which the support portion 540 is pressed toward the battery module 300 by the pack casing 100 and a preload is formed, as indicated by the part indicated by the dotted line in FIG. 4. Because the elastic part 500 is made of a metallic material and has a restoring force, the state in which an elastic force is stored may be maintained in case that the pack casing 100 presses the elastic part 500 toward the battery module 300. Thereafter, in case that thermal runaway occurs in the battery cell or the battery module 300, the pack casing 100 is expanded by a high-pressure gas or high-temperature flame, as indicated by the part indicated by the solid line in FIG. 4. In the case of the present disclosure, the elastic force stored in the elastic part 500 in which a preload is formed when the pack casing 100 is expanded by thermal runaway is applied. Therefore, even in the event of thermal runaway, the support portion 540 of the elastic part 500 may still be kept supported on the pack casing 100. Because the support portion 540 may be supported on the pack casing 100 and consistently press the module cover 320, the module cover 320 may be prevented from separating from the upper end of the battery module 300. If the module cover 320 is separated by flame or gas, the gas or flame may be released between the module cover 320 and the upper end of the module 300, and this means the release of the gas and flame in an inadvertent direction. Further, for this reason, the flame may propagate to another adjacent module 300 or cell. Therefore, according to the present disclosure, the module cover 320 stably presses the upper end of the module 300 and prevents the upper end of the module 300 from separating. As a result, it is possible to minimize or temporally delay the propagation of the gas or flame to the adjacent cell or the adjacent module 300.

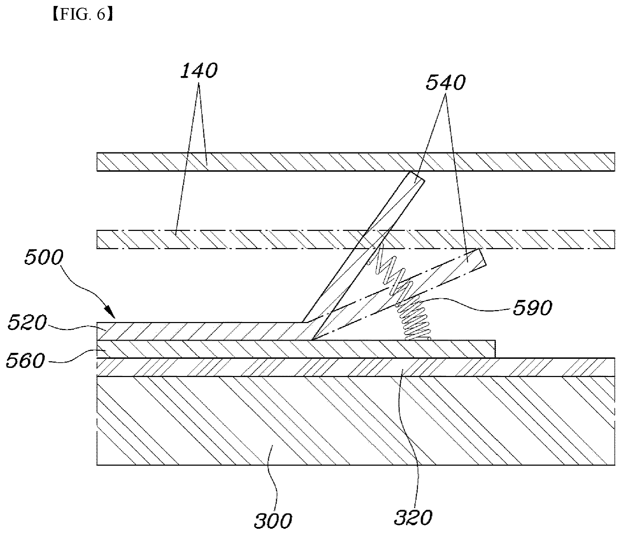

FIG. 6 is a view illustrating the elastic part 500 according to another embodiment of the present disclosure. In this case, the support portion 540 of the elastic part 500 is supported by an elastic body 590 positioned on one surface of the battery module 300. The elastic body 590 is disposed between the support portion 540 of the elastic part 500 and the battery module 300. As indicated by the part indicated by the dotted line in FIG. 6, before the pack casing 100 expands, the pack casing 100 presses the support portion 540 toward the battery module 300, and the elastic body 590 is kept contracted. As indicated by the part indicated by the solid line in FIG. 6, when the pack casing 100 is expanded by thermal runaway in the battery cell or the battery module 300, the elastic body 590 is also extended together with the support portion 540, and the support portion 540 is elastically supported by the elastic body 590, such that the support portion 540 may be kept more securely supported on the pack casing 100. In this case, the elastic body 590 may be configured as a metallic spring capable of withstanding a high-temperature or high-pressure situation. In some instances, a plurality of elastic bodies 590 may be required. In case that the elastic body 590 made of a metallic material is used, the insulation portion 560 needs to be essentially provided between the elastic part 500 and the battery module 300 in order to ensure insulation between the pack casing 100 and the battery module 300. As described above, the elastic body 590 is additionally added to the elastic part 500, such that a higher supporting force of the elastic part 500 may be ensured. In case that a plurality of elastic parts 500 is applied to one module 300, the elastic bodies 590 are applied only to some of the elastic parts 500, such that a difference in elastic forces may be set between the elastic parts 500.

The pack casing 100 may include the casing body 120 and the pack lead 140 to implement assemblability. The casing body 120 has a shape opened at one side thereof, and the pack lead 140 serves to close the opened side of the casing body 120. As illustrated in FIG. 1, in case that the casing body 120 is opened at an upper side thereof, internal spaces are formed in a bottom surface and a sidewall, and the battery module 300 is mounted in the casing body 120 through the upper side. Further, the upper side of the casing body 120 is closed by the pack lead 140, thereby protecting the battery module 300.

In the case of a battery mounted in a vehicle V, performance against a collision needs to be ensured, and secondary damage needs to be prevented in the event of a fire. Therefore, the pack casing 100 may be made of a metallic material. In addition, the pack casing may be made of aluminum that is easy to process, is light in weight, and has excellent durability among the metallic materials. The pack casing 100 made of a metallic material, such as aluminum, may be thermally deformed by expansion under a high-temperature or high-pressure environment caused by thermal runaway in some of the battery cells or the battery module 300. The pack lead 140 and the module cover 320, which are expanded by the thermal deformation, are spaced apart from each other, and a degree to which the module cover 320 separates may be increased at the corresponding point. The amount of expansion of the pack lead 140 may vary depending on the points even in one pack casing 100. Therefore, the elastic parts 500 of the present disclosure also need to be formed differently for respective points and support the module cover 320.

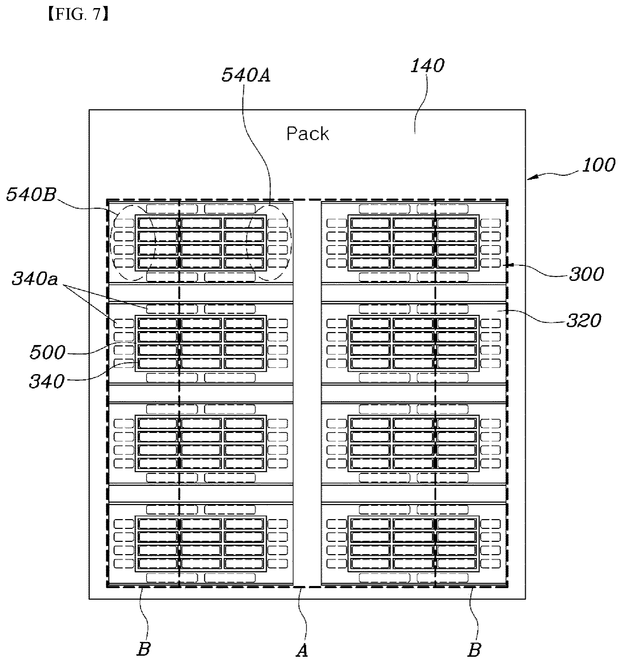

With reference to FIG. 7, the amount of expansion of an outer portion B, which is spaced apart from a central portion of the pack casing 100, is relatively smaller than that of a central portion A. The outer portion B of the casing body 120 is formed in a housing shape in which the bottom surface and the sidewall are integrated. The outer portion B of the pack lead 140 is coupled to the casing body 120 in various ways such as welding, bonding, and mechanical fastening. For this reason, the amount of expansion of the outer portion B of the pack casing 100 is limited even in the event of thermal runaway in the battery cell or the battery module 300. In contrast, in the case of the central portion A of the pack casing 100, the casing body 120 has a large surface shape for mounting the battery module 300, and the pack lead 140 is not a portion coupled directly to the casing body 120. Therefore, the amount of expansion is maximized in the event of thermal runaway. That is, in the event of thermal runaway, the pack lead 140 further expands as the distance from the central portion A decreases.

The plurality of support portions 540 of the elastic part 500 may be provided between the pack casing 100 and the battery module 300, and the amount of expansion varies depending on the points on the pack lead 140. Therefore, it is important to support the pack lead 140 in a balanced manner by selecting different support portions 540 for respective points when the pack lead 140 is expanded by the occurrence of thermal runaway in the battery cell or the battery module 300. Therefore, it is reasonable that the plurality of support portions 540 are disposed so that lengths or bending angles thereof are increased as the distance from the central portion A of the pack casing 100 decreases. The support portion 540A having a long length or a large bending angle may be disposed adjacent to the central portion A of the pack casing 100, and the support portion 540B having a short length or a small bending angle is disposed adjacent to the portion B spaced apart from the central portion, such that the design may be implemented in consideration of the amount of expansion of the pack lead 140, and the elastic part 500 may stably support the pack lead 140. Because the support portions 540 are differently designed at the central portion A of the pack casing 100 and the portion B spaced apart from the central portion, the elastic part 500 may be supported by the pack lead 140 in a balanced manner. Therefore, the pressing force applied to the module cover 320 is also maintained in a balanced manner. Therefore, even in a high-temperature or high-pressure situation, the module 300 may be effectively prevented from separating, thereby minimizing or delaying the propagation of the gas or flame to the adjacent cell or the adjacent module 300.

As illustrated in FIG. 2, the base portion 520 of the elastic part 500 includes a plurality of first frames 522 configured to traverse the battery module 300 in a width direction and provided in lattice shapes spaced apart from one another, and a plurality of second frames 524 extending in a direction intersecting the first frames 522 and configured to define a lattice shape. The support portion 540 may be configured by cutting a part of the cut base portion 520 and bending the base portion 520 toward the pack casing 100. The support portion 540 may be configured by bending a part of the second frame 524 toward the pack casing 100. Any one of one end and the other end of the second frame 524 of the base portion 520 is bent to configure the support portion 542. As illustrated, one end and the other end of the support portions 542 of the pair of adjacent second frames 524 may be formed alternately in a staggered manner.

Because the support portion 540 of the elastic part 500 receives the pressing force from the pack casing 100 and transmits the pressing force to the battery module 300 through the base portion 520, it is important that the plurality of support portions 540 in the elastic part 500 are supported by the pack casing 100 in a balanced manner. Therefore, as illustrated in FIG. 2, in the present disclosure, one end and the other end of the support portions 542 of the second frames 524 are formed alternately in a staggered manner, such that the supporting force applied from the pack casing 100 and the pressing force applied to the module cover 320 may be balanced. As a result, the battery module 300 may be prevented from separating in a high-temperature or high-pressure situation.

Specifically, one end support portion 542 of the second frame 524 is supported on the left side of the pack casing 100, such that the pressing force is transmitted to the right side of the base portion 520 and presses the module cover 320. The other end support portion 542 of the second frame 524 is supported on the right side of the pack casing 100, such that the pressing force is transmitted to the left side of the base portion 520 and presses the module cover 320. As described above, one end and the other end of the second frames 524 are disposed alternately in a staggered manner to form the support portions 542. Therefore, the elastic part 500 may be supported on the pack casing 100 in a balanced manner and stably press the module cover 320, such that the battery module 300 may be prevented from separating even in the event of thermal runaway, and the battery system may assist in improving the safety of the entire battery pack BP.

In contrast, outermost peripheral ends 544 of the plurality of second frames 524 do not configure the support portions 542 alternately in a staggered manner. As illustrated in FIG. 2, all the ends present at the outermost peripheries of two opposite ends of the second frames 524 are bent to configure the support portions 544. Because the outermost peripheral ends 544 at the two opposite ends of the second frames 524 need to be more stably supported on the pack casing 100 and effectively transmit the pressing force to the central portion of the base portion 520, all the ends are bent and supported on the pack casing 100 unlike the support portions 542 at one end and the other end of the second frame 524 formed alternately in a staggered manner. Therefore, because all the outermost peripheral ends 544 provided at the two opposite ends of the second frames 524 of the elastic part 500 are bent and supported on the pack casing 100, such that the pressing force obtained from the pack casing 100 may be effectively transmitted to the central portion of the base portion 520, and the base portion 520 may sufficiently press the battery module 300. The pressing force may prevent the battery module 300 from separating in the event of thermal runaway, thereby preventing or delaying the propagation of the gas or flame to the adjacent battery cell or the adjacent battery module 300.

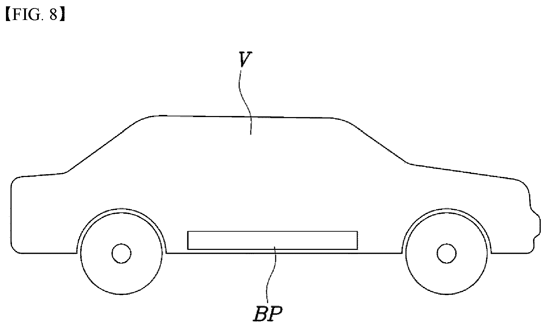

Meanwhile, as illustrated in FIG. 8, the battery system according to the present disclosure may be applied to the battery packs BP of various vehicles V such as internal combustion engine vehicles, electric vehicles, hybrid vehicles, and fuel cell electric vehicles. In addition to the vehicle V, the cover assembly for a battery module may be applied to the battery packs BP in various fields, such as industrial energy storage systems (ESSs) or household ESSs, and small-scale battery packs.

While the specific embodiments of the present disclosure have been illustrated and described, it will be obvious to those skilled in the art that the present disclosure may be variously modified and changed without departing from the technical spirit of the present disclosure defined in the appended claims.

## Claims

1. A battery system comprising:
a battery module having one surface on which venting parts are formed;
a pack casing in which the battery module is installed; and
an elastic part provided on one surface of the battery module and disposed at a point that does not overlap the venting part,
wherein a part of the elastic part protrudes toward the pack casing and is supported, such that the elastic part presses one surface of the battery module based on the pack casing.

2. The battery system of claim 1, wherein the plurality of venting parts are provided on one surface of the battery module and spaced apart from one another,
the elastic part has a lattice shape and is positioned between the plurality of venting parts, an outermost peripheral venting part, among the plurality of venting parts formed on one surface of the battery module, is provided adjacent to a rim of the battery module, and the elastic part is provided at a point disposed inward of the outermost peripheral venting part.

3. The battery system of claim 1, wherein the elastic part comprises:
a base portion; and
a support portion and
wherein the support portion is supported on the pack casing and made by bending a part of the base portion in a direction toward the pack casing.

4. The battery system of claim 3, wherein the elastic part has an insulation portion, the insulation portion is made of a fire resistance material and disposed between the base portion and the battery module, the insulation portion of the elastic part is tightly attached to one surface of the battery module, and an end of the support portion is supported on an inner surface of the pack casing.

5. The battery system of claim 3, wherein the base portion of the elastic part is made of a metallic material, and the support portion is integrated with the base portion.

6. The battery system of claim 3, wherein a bead is provided on the base portion of the elastic part and protrudes in a direction in which the base portion extends, the bead is formed on the base portion and extends to the support portion, and the bead protrudes in a direction toward the pack casing.

7. The battery system of claim 3, wherein the support portion of the elastic part is pressed by the pack casing when the pack casing does not expand, such that a preload is formed toward the battery module.

8. The battery system of claim 3, wherein when the pack casing expands, the support portion of the elastic part is kept supported on the pack casing, and an angle at which the support portion is bent toward the pack casing is increased.

9. The battery system of claim 3, wherein the support portion of the elastic part is supported on one surface of the battery module by an elastic body, the elastic body is extended when the pack casing expands, and the support portion is elastically supported on the pack casing by the elastic body.

10. The battery system of claim 3, wherein the support portion of the elastic part is provided as a plurality of support portions, and lengths or bending angles of the plurality of support portions are increased as the distance from a central portion of the pack casing decreases.

11. The battery system of claim 3, wherein the base portion of the elastic part comprises:
a plurality of first frames spaced apart from one another and configured to traverse the battery module in a width direction; and
a plurality of second frames configured to connect the first frames and extending in a direction intersecting the first frames, the support portion is configured by bending a part of the second frame toward the pack casing, the support portion is configured by bending any one of one end and the other end of the second frame, and the support portions are formed in a staggered manner at one end and the other end of the pair of adjacent second frames.

12. The battery system of claim 11, wherein all outermost peripheral ends of the second frames disposed at outermost peripheries among the plurality of second frames are bent to configure the support portions.

13. The battery system of claim 1, wherein the pack casing is opened at one side thereof, one opened side is closed by a pack lead, and the elastic part is provided between the pack lead and the battery module.

14. The battery system of claim 1, wherein a module cover having the plurality of venting parts is provided on one surface of the battery module, and the elastic part is disposed between the pack casing and the module cover and provided at a point departing from the venting part.

15. A vehicle comprising the battery system of claim 1.
